# EUROPEAN PATENT APPLICATION

(11) **EP 1 903 351 A1**
(43) Date of publication of application: **26.03.2008**
(21) Application number: 07116483.4
(22) Date of filing: 14.09.2007
(51) Int. Cl.: G01S 5/14, H04L 29/06

(54) **System and method for providing authorization to use corrections provided by an RTK base station**

(30) Priority: 21.09.2006 US 525318
(71) Applicant: Deere & Company, Moline, IL 61265-8098 (US)
(72) Inventor: Nelson, Frederick W, Waukee, IA 50263 (US); Siever, Bryan C, Des Moines, IA 50310 (US); Eslinger, Daniel J, Redondo Beach, CA 90278 (US); Karnei, Jarred R, Urbandale, IA 50323 (US); Grefsrud, Orvin R, Torrance, CA 90503 (US)
(74) Representative: Holst, Sönke

(57) **Abstract**

The present invention pertains to method for providing authorization to use corrections provided by a differential GPS base station (102), comprising:
providing an access list to the differential GPS base station (102);
broadcasting the access list from the differential GPS base station (102); and
broadcasting a differential GPS correction signal from the differential GPS base station (102),

wherein the differential GPS correction signal is applied by a mobile differential GPS receiver (106) when the mobile differential GPS receiver (106) receives the access list and the mobile differential GPS receiver (106) determines that the access list authorizes the mobile differential GPS receiver (106) to apply the differential GPS correction signal.

## Description

The present invention relates to the field of satellite-based guidance systems, such as Global Positioning System (GPS)-based guidance systems, and particularly to a system and method for providing authorization to use corrections provided by a Differential Global Positioning System (DGPS) base station, such as an RTK (Real Time Kinematic) base station.

Satellite-based guidance systems, such as GPS-based guidance systems, are commonly used today as a navigation aid in cars, airplanes, ships, computer-controlled harvesters, mine trucks and other vehicles. For instance, GPS-based guidance systems utilized in farming equipment may allow for precise application of crop protection products, such as fertilizers, pesticides or lime. However, a number of current GPS-based guidance systems may be prone to inaccuracies (i.e.-GPS drift) due to atmospheric interference with GPS satellite signals received by a GPS receiver, such as interference from the ionosphere, troposphere, cloud cover, weather, tall buildings and the like.

Differential GPS (DGPS) systems, such as Real Time Kinematic (RTK) systems, may be implemented for correcting inaccuracies in elevation measurements taken by GPS receivers, said inaccuracies being attributable to GPS drift. RTK systems may continuously compare data (ex.-GPS satellite signals) received from a GPS system to positional and elevation measurements for a surveyed location, such as a surveyed base station. The data comparison may be used to generate correction factors for adjusting measurements taken by mobile differential GPS receivers in the vicinity of the surveyed base station, since the satellite signals received by the mobile differential GPS receivers will be subject to atmospheric interference similar to that detected by the RTK system at the base station. RTK systems may further utilize radio links with the base station to send said correction factors to mobile differential GPS receivers for adjusting elevation measurements taken by the receivers. However, current RTK systems do not prevent unauthorized mobile differential GPS receivers (i.e., unauthorized rovers), such as those rovers for which RTK correction services have not been purchased, from applying correction signals received from the RTK base station.

Therefore, it may be desirable to have a system and method for providing authorization to use corrections provided by a differential GPS base station which addresses the above-referenced problems and limitations of the current solutions.

Accordingly, the present invention is directed to a method for providing authorization to use corrections provided by a differential GPS base station, including: providing an access list to the differential GPS base station; broadcasting the access list from the differential GPS base station; broadcasting a differential GPS correction signal from the differential GPS base station, wherein the differential GPS correction signal is applied by a mobile differential GPS receiver when the mobile differential GPS receiver receives the access list and only if the mobile differential GPS receiver determines that the access list authorizes the mobile differential GPS receiver to apply the differential GPS correction signal.

A further embodiment of the present invention is directed to a method for providing authorization to use corrections provided by a differential GPS base station, including: receiving an access list at a mobile differential GPS receiver, the access list having been broadcast from the differential GPS base station; receiving a differential GPS correction signal at the mobile differential GPS receiver; and applying the differential GPS correction signal at the mobile differential GPS receiver when the mobile differential GPS receiver determines that the access list authorizes the mobile differential GPS receiver to apply the differential GPS correction signal, wherein the differential GPS correction signal is prevented from being applied at the mobile differential GPS receiver when the mobile differential GPS receiver determines that the access list does not authorize the mobile differential GPS receiver to apply the differential GPS correction signal.

The present invention is further directed to a system, including: a differential GPS base station configured for broadcasting an access list and a differential GPS correction signal, the access list including a serial number of at least one mobile differential GPS receiver authorized for applying the differential GPS correction signal; and a mobile differential GPS receiver, the mobile differential GPS receiver configured for being communicatively coupled with the differential GPS base station, the mobile differential GPS receiver being configured for receiving the access list and the differential GPS correction signal broadcast by the differential GPS base station, wherein the mobile differential GPS receiver is further configured for applying the differential GPS correction signal when the mobile differential GPS receiver determines that the access list includes a serial number of the mobile differential GPS receiver.

The numerous advantages of the present invention may be better understood by those skilled in the art by reference to the accompanying figures in which:
FIG. 1 is a block diagram illustration of a system in accordance with an exemplary embodiment of the present invention;
FIG. 2 is a flow chart illustrating a method for providing authorization to use corrections provided by a differential GPS base station in accordance with an exemplary embodiment of the present invention;
FIG. 3 is a flow chart illustrating a method for providing authorization to use corrections provided by a differential GPS base station in accordance with an additional exemplary embodiment of the present invention; and
FIG. 4 is a flow chart illustrating steps included in receiving an access list at a mobile differential GPS receiver, wherein receiving said access list is a step included in a method, as shown in FIG. 3, for providing authorization to use corrections provided by a differential GPS base station in accordance with an exemplary embodiment of the present invention.

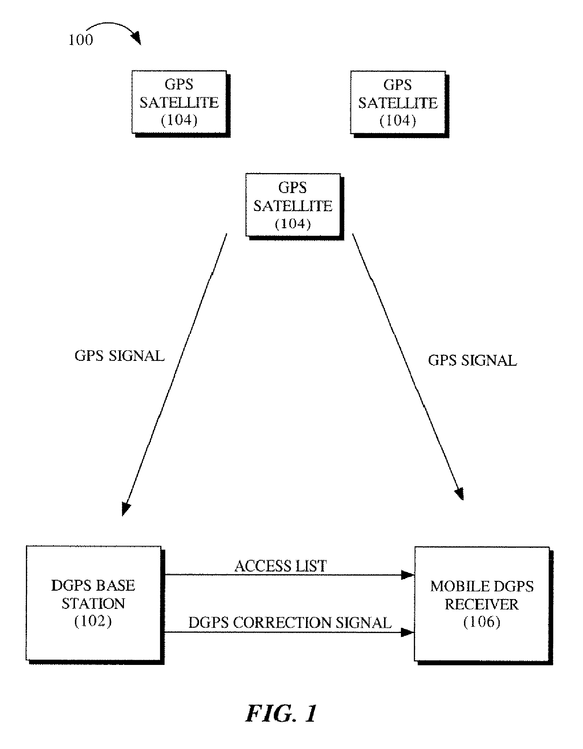

FIG. 1 illustrates a block diagram configuration for a system 100 in accordance with an exemplary embodiment of the present invention. In a present embodiment the system 100 includes a Differential Global Positioning System (DGPS) base station 102, such as a Real Time Kinematic (RTK) base station. In the exemplary embodiment, the DGPS base station 102 may be a fixed-position base station 102 configured for monitoring GPS satellites 104 and receiving signals from the GPS satellites 104. The DGPS base station 102 may utilize information provided by the signals received from the GPS satellites to continuously calculate the base station's position/location. In some situations, the base station's calculated position may change, even though the base station 102 has remained in a fixed position. This may be attributable to deviations in the signals received from the GPS satellites 104, a condition known as GPS drift, which may be caused by atmospheric conditions, physical obstructions (ex-tall buildings) or the like. The DGPS base station 102 may be further configured for calculating the degree of deviation in the GPS signal and for generating a differential GPS (DGPS) correction signal, such as an RTK correction signal, which includes a correction for correcting calculated position information, the correction being based upon the calculated degree of deviation.

The system 100 further includes at least one mobile differential GPS (DGPS) receiver (i.e., rover) 106. In current embodiments, the mobile DGPS receiver 106 may be configured for being mounted on vehicles, such as tractors or other agriculture vehicles, so that it may be implemented with an assisted steering system, such as the GreenStar^{™} AutoTrac assisted steering system, for providing differential satellite-based navigation functionality to said vehicles. For example, the mobile DGPS receiver 106 may be an RTK receiver, such as a StarFire^{™} RTK receiver. In the present embodiment, the mobile DGPS receiver 106 may be configured for receiving a signal from the GPS satellites 104 and utilizing the signal received from the GPS satellites to continuously calculate a position of the mobile DGPS receiver 106. Such capabilities may allow a vehicle to which the mobile DGPS receiver 106 may be connected to be maintained along a desired travel path, such as when plowing a field or the like. However, since the position of the mobile DGPS receiver 106 in the above scenario is not fixed, the mobile DGPS receiver 106 may not be able to determine when deviations (as may be caused by GPS drift) have been introduced to the signals it receives from the GPS satellites. This may result in the mobile DGPS receiver inaccurately calculating its position, causing the vehicle to which it is attached to deviate from the desired travel path.

In an exemplary embodiment, the DGPS base station 102 may be communicatively coupled with the mobile DGPS receiver 106. For example, the mobile DGPS receiver 106 may be mounted on farming equipment in a nearby field and may be within communicative range of the DGPS base station 102. For embodiments implementing an RTK base station and an RTK receiver, a suitable communicative range may be, for instance, 6 miles or less. In present embodiments, the DGPS base station 102 is configured for broadcasting the DGPS correction signal discussed above. The DGPS base station 102 is also configured for broadcasting an access list. In the current embodiments, the access list includes information designating one or more DGPS receivers 106 as being authorized to apply the DGPS correction signal. For instance, the access list may list a serial number of at least one DGPS receiver 106 authorized to apply the DGPS correction signal. In further embodiments, the mobile DGPS receiver 106 may be configured for receiving the access list broadcast by the DGPS base station 102. The mobile DGPS receiver 106 may be further configured, such as by containing instructions or routines, to read the access list and to determine if the access list authorizes the mobile DGPS receiver 106 to apply the DGPS correction signal. As discussed above, the access list may include one or more serial numbers corresponding to one or more mobile DGPS receivers authorized to apply the DGPS correction signal. For example, a mobile DGPS receiver may be authorized if its user or owner has paid a subscription fee for applying DGPS correction signals broadcast from the DGPS base station 102, in which case, in the exemplary embodiment, a serial number associated with an authorized receiver 106 would be included on the access list.

In further embodiments, the mobile DGPS receiver 106 is configured for receiving the DGPS correction signal broadcast by the DGPS base station. Further, the mobile DGPS receiver 106 may be configured for applying the correction of the DGPS correction signal to position information (determined or calculated by the mobile DGPS receiver 106 utilizing GPS satellite signal(s) received by the mobile DGPS receiver 106) of the mobile DGPS receiver 106 when the mobile DGPS receiver 106 determines that the access list authorizes the mobile DGPS receiver 106 to apply the DGPS correction signal. For instance, after reading its serial number on the access list and making a determination that it is authorized to apply the DGPS correction signal, the mobile DGPS receiver 106 may then apply and use the DGPS correction signal. By applying the correction, the mobile DGPS receiver 106 is able to more accurately determine its position, which allows the receiver 106 to guide or maintain a vehicle to which the receiver 106 may be mounted or attached on or along a desired travel path. It may be assumed that signal deviation affecting GPS satellite signals received at the base station 102 is the same for GPS satellite signals received at the mobile DGPS receiver 106 when the mobile DGPS receiver 106 is within range of the base station 102. Thus, the DGPS correction signal generated at the base station may be applied to the position information determined or calculated at the mobile DGPS receiver 106 for providing accurate, corrected position information.

In additional embodiments, the mobile DGPS receiver 106 is configured for preventing the DGPS correction signal from being applied at or by the mobile DGPS receiver 106 when the receiver 106 determines that the access list does not authorize the receiver 106 to access the DGPS correction signal. For example, after reading the access list and failing to locate its serial number on the access list, the mobile DGPS receiver 106 may determine that it is not authorized to apply the DGPS correction signal. Thus, the mobile DGPS receiver 106 may prevent the DGPS correction signal from being applied at or by the receiver 106, such as by ignoring the DGPS correction signal. In this manner, authorization to use corrections provided by the base station 102 may be achieved in that application of DGPS correction signals from the DGPS base station 102 for providing DGPS navigation capabilities may be limited to those DGPS receivers 106 having users/owners who have subscribed and/or paid to use or apply the DGPS correction signals from the base station 102.

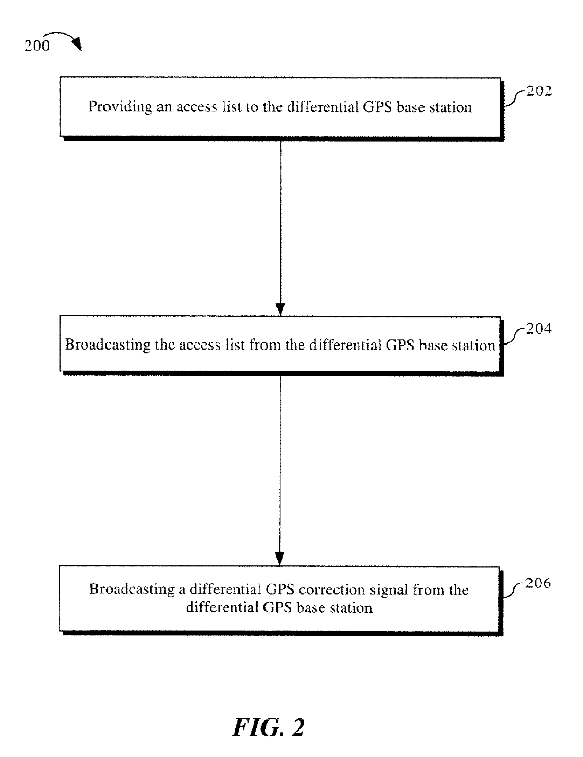

FIG. 2 is a flow chart illustrating a method for providing authorization to use corrections provided by a differential GPS base station 200 in accordance with an exemplary embodiment of the present invention. The method 200 includes providing an access list to the differential GPS base station 202. The method 200 further includes broadcasting the access list from the differential GPS base station 204. The method 200 further includes broadcasting a differential GPS correction signal, such as an RTK correction signal, from the differential GPS base station 206. In exemplary embodiments, the differential GPS correction signal is applied by a mobile differential GPS receiver when the mobile differential GPS receiver receives the access list and the mobile differential GPS receiver determines that the access list authorizes the mobile differential GPS receiver to apply or use the differential GPS correction signal.

In further embodiments, the differential GPS correction signal is prevented from being applied by the mobile differential GPS receiver when the mobile differential GPS receiver determines that the access list does not authorize the mobile differential GPS receiver to apply the differential GPS correction signal. In additional embodiments, the access list, when received by the mobile differential GPS receiver, is read by the mobile differential GPS receiver to determine if a serial number of the mobile differential GPS receiver is included in the access list. In still further embodiments, the mobile differential GPS receiver determines that the access list authorizes the mobile differential GPS receiver to apply the differential GPS correction signal when the serial number of the mobile differential GPS receiver is included in the access list. In additional embodiments, the mobile differential GPS receiver determines that the access list does not authorize the mobile differential GPS receiver to apply the differential GPS correction signal when the serial number of the mobile differential GPS receiver is not included in the access list.

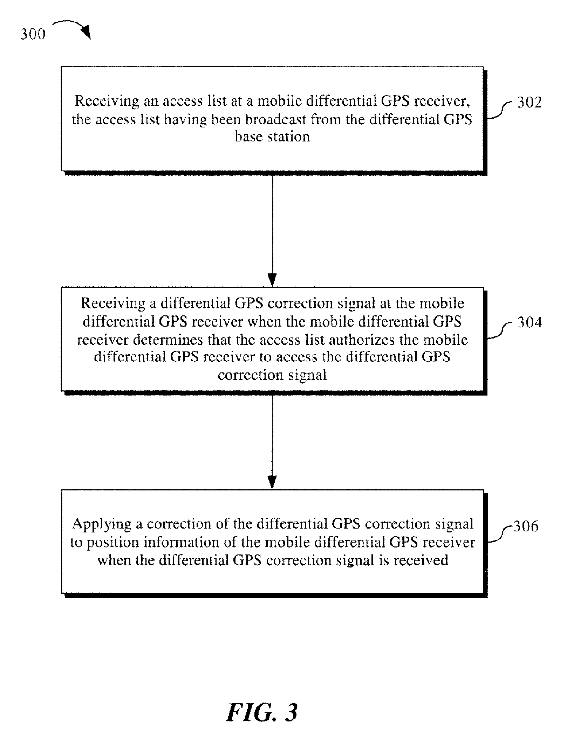

FIG. 3 is a flowchart illustrating a method for providing authorization to use corrections provided by a differential GPS base station 300 in accordance with an additional exemplary embodiment of the present invention. The method 300 includes receiving an access list at a mobile differential GPS receiver, the access list having been broadcast from the differential GPS base station 302. The method 300 further includes receiving a differential GPS correction signal at the mobile differential GPS receiver 304. The method 300 further includes applying the differential GPS correction signal at the mobile differential GPS receiver when the mobile differential GPS receiver determines that the access list authorizes the mobile differential GPS receiver to apply the differential GPS correction signal 306. For instance, a correction of the differential GPS correction signal is applied to position information of the mobile differential GPS receiver when the differential GPS correction signal is applied by the mobile differential GPS receiver. In an exemplary embodiment, the differential GPS correction signal is prevented from being applied at or by the mobile differential GPS receiver when the mobile differential GPS receiver determines that the access list does not authorize the mobile differential GPS receiver to apply the differential GPS correction signal.

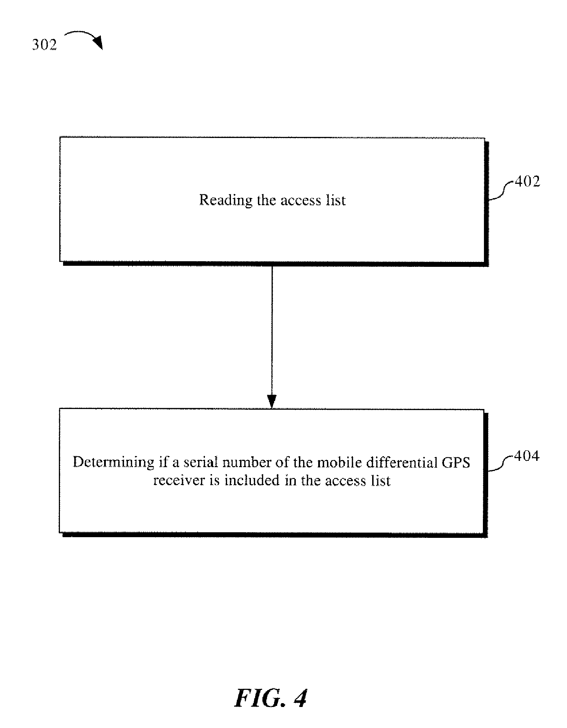

In further embodiments (as shown in FIG. 4), the step of receiving the access list at a mobile differential GPS receiver 302 may include the step of reading the access list 402. The step of receiving the access list at a mobile differential GPS receiver 302 may further include the step of determining if a serial number of the mobile differential GPS receiver is included in the access list 404. In exemplary embodiments, the mobile differential GPS receiver is authorized to apply the differential GPS correction signal when the serial number of the mobile differential GPS receiver is included in the access list. Further, the mobile differential GPS receiver is not authorized to apply the differential GPS correction signal when the serial number of the mobile differential GPS receiver is not included in the access list.

It is contemplated that the invention may take the form of an entirely hardware embodiment, an entirely software embodiment or an embodiment containing both hardware and software elements. In a preferred embodiment, the invention is implemented in software, which includes but is not limited to firmware, resident software, microcode, and the like. Furthermore, the invention may take the form of a computer program product accessible from a computer-usable or computer-readable medium providing program code for use by or in connection with a computer or any instruction execution system. For the purposes of this description, a computer-usable or computer readable medium may be any apparatus that may contain, store, communicate, propagate, or transport the program for use by or in connection with the instruction execution system, apparatus, or device.

It is further contemplated that the medium may be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk -read/write (CD-R/W) and DVD.

A data processing system suitable for storing and/or executing program code will include at least one processor coupled directly or indirectly to memory elements through a system bus. The memory elements may include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, microphone, speakers, displays, pointing devices, and the like) may be coupled to the system either directly or through intervening I/O controllers.

Network adapters may also be coupled to the system to enable the data processing system to become coupled to other data processing systems or storage devices through intervening private or public networks. Modems, cable modem and Ethernet cards are just a few of the currently available types of network adapters.

It is understood that the specific order or hierarchy of steps in the foregoing disclosed methods are examples of exemplary approaches. Based upon design preferences, it is understood that the specific order or hierarchy of steps in the method can be rearranged while remaining within the scope of the present invention. The accompanying method claims present elements of the various steps in a sample order, and are not meant to be limited to the specific order or hierarchy presented.

## Claims

1. A method for providing authorization to use corrections provided by a differential GPS base station (102), comprising:
providing an access list to the differential GPS base station (102);
broadcasting the access list from the differential GPS base station (102); and
broadcasting a differential GPS correction signal from the differential GPS base station (102),
wherein the differential GPS correction signal is applied by a mobile differential GPS receiver (106) when the mobile differential GPS receiver (106) receives the access list and the mobile differential GPS receiver (106) determines that the access list authorizes the mobile differential GPS receiver (106) to apply the differential GPS correction signal.

2. A method as claimed in claim 1, wherein the differential GPS correction signal is prevented from being applied by the mobile differential GPS receiver (106) when the mobile differential GPS receiver (106) determines that the access list does not authorize the mobile differential GPS receiver (106) to apply the differential GPS correction signal.

3. A method as claimed in claim 1, wherein the access list, when received by the mobile differential GPS receiver (106), is read by the mobile differential GPS receiver (106) to determine if a serial number of the mobile differential GPS receiver (106) is included in the access list.

4. A method as claimed in claim 3, wherein the mobile differential GPS receiver (106) determines that the access list authorizes the mobile differential GPS receiver (106) to apply the differential GPS correction signal when the serial number of the mobile differential GPS receiver (106) is included in the access list.

5. A method as claimed in claim 3, wherein the mobile differential GPS receiver (106) determines that the access list does not authorize the mobile differential GPS receiver (106) to apply the differential GPS correction signal when the serial number of the mobile differential GPS receiver (106) is not included in the access list.

6. A method as claimed in one of claims 1 to 5, wherein a correction of the differential GPS correction signal is applied to position information of the mobile differential GPS receiver (106) when the differential GPS correction signal is applied by the mobile differential GPS receiver (106).

7. A method as claimed in one of claims 1 to 6, wherein the differential GPS base station (102) is a Real Time Kinematic (RTK) base station configured for broadcasting an RTK correction signal.

8. A system (100), comprising:
a differential GPS base station (102) configured for broadcasting an access list and a differential GPS correction signal, the access list including a serial number of at least one mobile differential GPS receiver authorized for applying the differential GPS correction signal; and
a mobile differential GPS receiver (106), the mobile differential GPS receiver (106) configured for being communicatively coupled with the differential GPS base station (102), the mobile differential GPS receiver (106) being configured for receiving the access list and the differential GPS correction signal broadcast by the differential GPS base station (102),
wherein the mobile differential GPS receiver (106) is further configured for applying the differential GPS correction signal when the mobile differential GPS receiver determines that the access list includes a serial number of the mobile differential GPS receiver (106).

9. A system (100) as claimed in claim 8, wherein the mobile differential GPS receiver (106) is further configured for preventing the differential GPS correction signal from being applied at the mobile differential GPS receiver (106) when the mobile differential GPS receiver (106) determines that the access list does not include the serial number of the mobile differential GPS receiver (106).

10. A system (100) as claimed in claim 8 or 9, wherein a correction of the differential GPS correction signal is applied to position information of the mobile differential GPS receiver (106) when the differential GPS correction signal is applied by the mobile differential GPS receiver (106).

11. A system (100) as claimed in one of claims 8 to 10, wherein the differential GPS base station (102) is a Real Time Kinematic (RTK) base station configured for broadcasting an RTK correction signal and wherein the mobile differential GPS receiver (106) is an RTK receiver.
